# EUROPEAN PATENT APPLICATION

(11) **EP 4 796 185 A1**
(43) Date of publication of application: **26.08.2026**
(21) Application number: 25159518.7
(22) Date of filing: 21.02.2025
(51) Int. Cl.: A62C 3/00, A62C 35/13, B65G 1/04

(54) **A STACKABLE CONTAINER**

(71) Applicant: AutoStore Technology AS, 5578 Nedre Vats (NO)
(72) Inventor: MYRMO, Øystein, 5578 Nedre Vats (NO); IVARJORD, Åsmund, 5578 Nedre Vats (NO)
(74) Representative: Kilburn & Strode LLP

(57) **Abstract**

The disclosure relates to a stackable container (500) for use in an automated storage and retrieval system (100). The stackable container (500) comprises: an enclosure (502); a vessel (510a, 510b) held therein by the enclosure (502) and comprising a fire suppressant reservoir; and a fluidic outlet for releasing fire suppressant from the stackable container (500). The vessel (510a, 510b) is activatable to bring the fire suppressant reservoir into communication with the fluidic outlet.

## Description

### TECHNICAL FIELD

The disclosure relates to a stackable container. More particularly, it relates to a stackable container for use in an automated storage and retrieval system, an automated storage and retrieval system, and a method of suppressing fire in an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

As a safety measure, warehouses usually include fire detection and suppression systems. Detection systems detect conditions indicative of fire in the warehouse, such as smoke or heat. In response, the detection systems trigger alarms and/or fire suppression systems. Traditional warehouse fire suppression systems involve ceiling sprinklers supplying fire suppressant downward into the warehouse. In Europe, the configuration and operation of these ceiling sprinklers are governed by European standard EN 12845:2015, which prescribes a maximum clearance from a storage location and ceiling sprinklers, and minimum storage block and aisle sizes. When triggered, the alarm may call fire fighters to the warehouse to supply fire suppressant directly onto the fire from the warehouse aisles using a firehose.

However, existing fire suppression systems may not be susceptible to further improvement for automated storage and retrieval systems comprising a three-dimensional grid.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows an isometric view of an example container according to the present disclosure which includes fire suppressant cannisters;
Fig. 5B shows an isometric view of another example container according to the present disclosure which includes a fire suppressant bladder;
Fig. 5C shows an isometric view of the example container of either Figs. 5A or 5B, further including a lid;
Fig. 6 shows an isometric, phantom view of an example container according to the present disclosure;
Figs. 7A and 7B show example operations in activating a vessel in the example container of Fig. 6;
Fig. 8 shows the system of Fig. 1 containing containers according to any of Figs. 5A-7B.
Fig. 9 shows a flowchart depicting a method of supressing fire in an automated storage and retrieval system using the container of any of Figs. 5A-7B.

### DETAILED DESCRIPTION

The following overview is provided to introduce in simplified form a selection of concepts that are further described herein. The overview is not intended to identify only key or essential features of the invention.

In overview, the disclosure relates to a container which can be stacked in an automated storage and retrieval system and which holds fire suppressant. Such a container can also be referred to as a 'fire suppressing bin'. Accordingly, containers according to the present disclosure can be used to suppress, and by extension extinguish, fire and combustion within a storage grid of an automated storage and retrieval system. In particular, containers according to the present disclosure can be driven - during normal operation of an automated storage and retrieval system - by robotic container-handling vehicles, to zones and columns of a storage system which are likely to contain fire.

By holding fire suppressant, the fire suppressing bins can provide a fire suppression system which, in at least some implementations: can be portable and retrofittable to an existing storage system; can access (at least substantially) each cell across the storage space; can provide quick, localised and targeted fire suppression during normal operation of the storage system, thereby reducing risk of fire spread; and can be spatially efficient by minimising the amount of grid space (i.e., potential storage space) occupied therewith. Since fire suppressing bins can suppress fire in goods stored in the storage system, fire suppressing bins can suppress fire before a container is transported about the storage system by the robotic container-handling vehicles, thereby isolating the fire and preventing both fire spreading around the grid, and risk of damage to a robot transporting a container holding burning goods.

Fire suppressing bins according to the present disclosure can include an enclosure with surfaces (e.g., any of a base, sidewalls, and/or a lid) bordering an internal storage space of the fire suppressing bin. The internal storage space may hold a vessel comprising a fire suppressant reservoir. The vessel is activatable to release fire suppressant from its fire suppressant reservoir into the storage system. To achieve this, the vessel may be activatable to bring the fire suppressant reservoir into communication with the fluidic outlet. Since the vessel is activatable to bring the fire suppressant reservoir into communication with the fluidic outlet, fire suppressing bins according to the present disclosure can selectively and reliably deliver fire suppressant therefrom, particularly when activated.

The fire suppressant stored in the fire suppressant reservoir may be a gas fire suppressant and/or a foam fire suppressant. As such, when released in a storage system, the fire suppressant may reduce damage to inventory stored therein. In particular, fire suppressant may reduce damage to inventory stored therein when compared to, for instance, water fire suppressant.

The disclosure also relates to methods of suppressing fire in an automated storage and retrieval system, for instance by using a fire suppressing bin according to the present disclosure. This method includes delivering fire suppressant from a fluidic outlet of the fire suppressing bin and into the automated storage and retrieval system. As such, the methods of the present disclosure can, in at least some implementations, exhibit the effects described above with respect to the containers according to the present disclosure.

To assist with accessing each cell across the storage space, methods according to the present disclosure may include using robotic container-handling vehicles of the storage system to transport fire suppressing bins to a selected column of the storage system and/or a selected cell thereof. By leveraging storage system robots, the disclosed fire suppression methods are readily retrofittable to existing automated storage and retrieval systems. Furthermore, transporting fire suppressing bins to selected columns prior to fire suppressant delivery can enable fast, localised and targeted fire suppression to a zone of the storage system which includes the selected column. Accordingly, inventory damage across the storage system and outside the zone and/or column can be avoided. To assist with localisation, methods according to the present disclosure may further comprise digging at least one additional container from the selected column before disposing the fire suppressing bin in the selected column.

In some implementations, delivering fire suppressant from a fluidic outlet of the fire suppressing bin and into the automated storage and retrieval system includes activating a vessel comprising a fire suppressant reservoir in the fire suppressing bin. Several possible effective and dedicated activation methods for fire suppressing bins are described herein, without limitation.

For instance, activating the vessel may include at least one of opening a valve of in the vessel; perforating the vessel (e.g., if the bag comprises a pressurised bladder); and/or triggering fire suppressant expansion (e.g., if the fire suppressant is heat-expanding foam). Similarly, activating the vessel may include activating the vessel by a robotic container-handling vehicle, which can allow the fire suppressing bin to be stored in the storage system and selectively activated when required, thereby reducing the distance by which the fire suppressing bins must be transported across a storage system. Similarly, activating the vessel may include stacking the fire suppressing bin with another stackable container (e.g., to activate a weighted trigger in the fire suppressing bin), which can allow quick fire suppression by providing activation upon fire suppressing bin deposition in the selected column.

In the following, implementations according to the present disclosure will be discussed in more detail with reference to the appended drawings. It should be understood, however, that the drawings are not intended to limit the present disclosure to the subject-matter depicted in the drawings. The implementations described with reference to the drawings can be understood in isolation from, as well as in the context of, the concepts set out in the claims, clauses and/or overview of the present disclosure.

### Automated storage and retrieval system overview

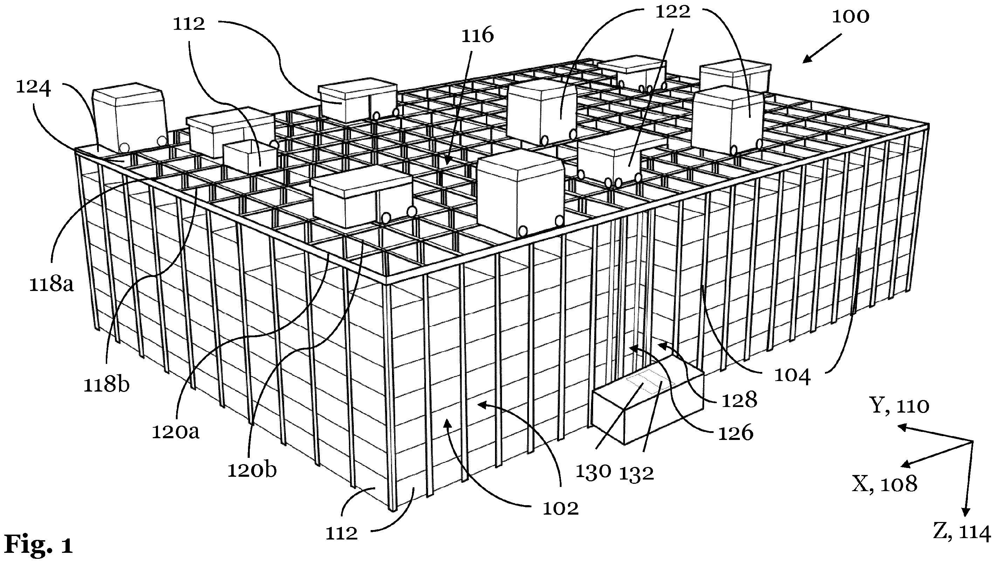

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

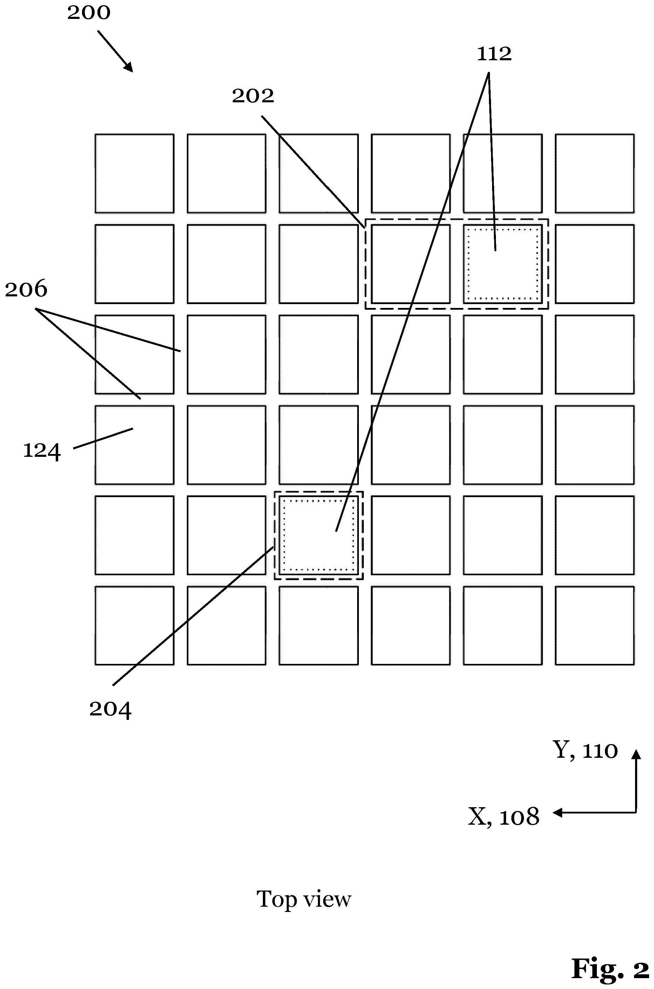

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

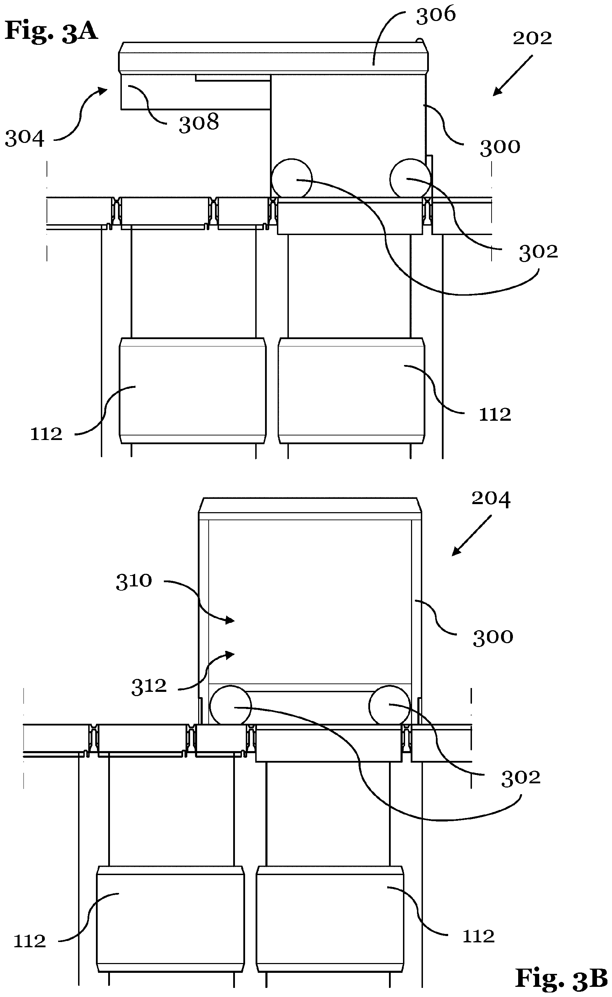

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

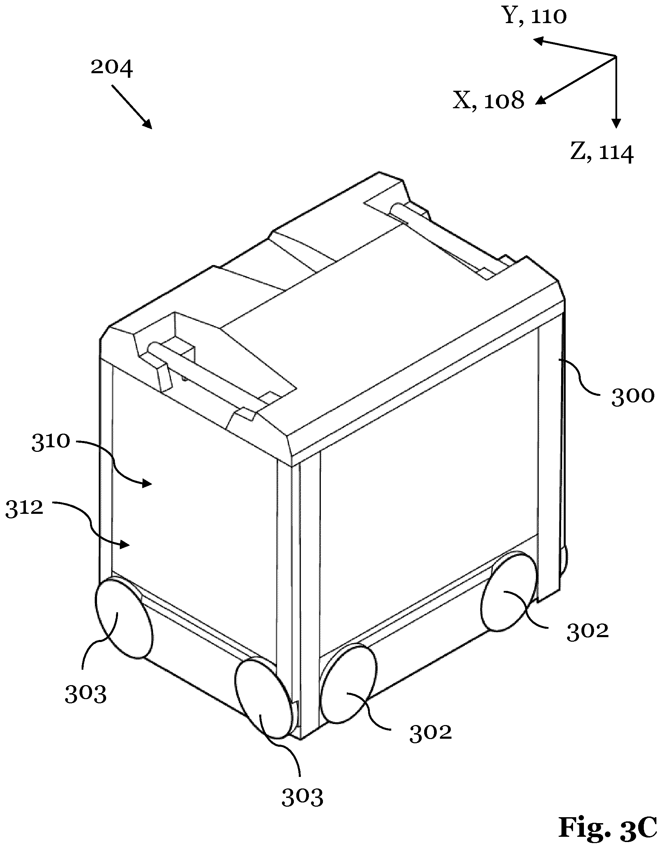

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

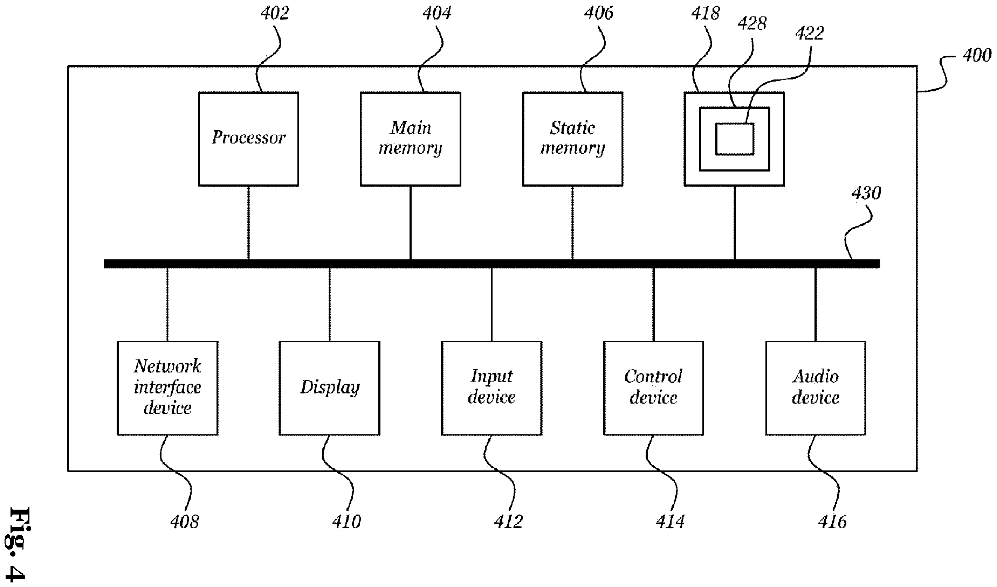

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Containers for use in supressing fire

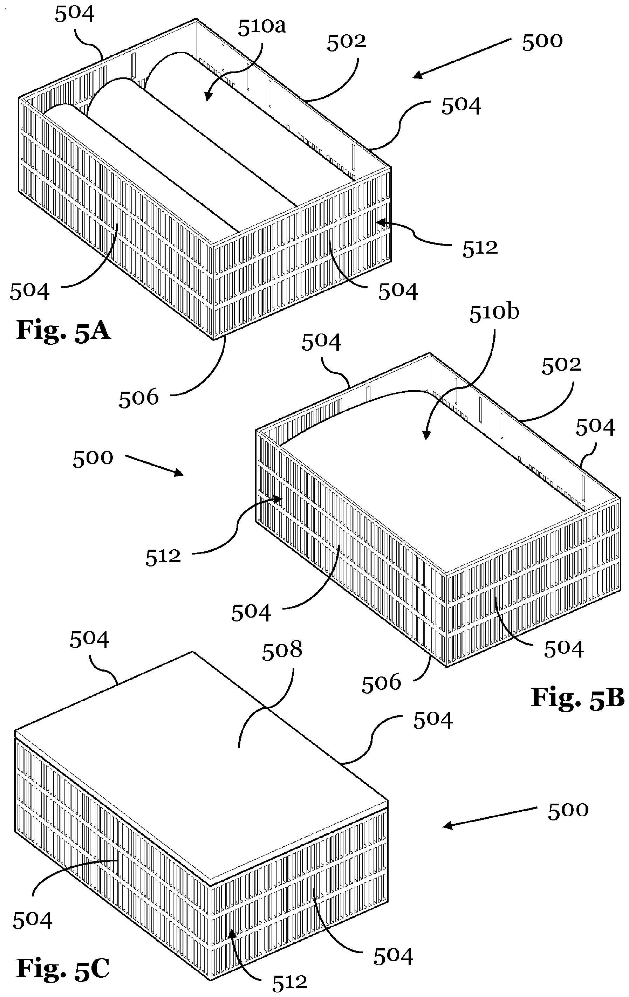

Figs. 5A-5C show example containers 500 according to the present disclosure. The containers 500 can be used in fire suppression methods and systems. The containers 500 are suitable for use in an automated storage and retrieval system, such as is described with respect to Figs. 1-4. As such, the containers 500 are stackable atop each other, preferably in a self-supporting manner, in a storage column of the storage system. The containers 500 may be structured to occupy at least one cell when stored in the storage system. The containers 500 may therefore be structured and/or shaped to have substantially the same silhouette and/or footprint as the storage containers and bins for storing goods and inventory otherwise described, particularly with respect to Figs. 1-4. In the present description, the containers 500 according to the present disclosure may also be referred to as 'fire suppressing bins' to disambiguate such containers from other containers and bins of the storage system, which may similarly be referred to as 'storage bins'.

The fire suppressing bins 500 may include an enclosure 502. The enclosure 502 is a supporting structure arranged to hold and retain the contents of the fire suppressing bins 500 in an internal storage space of the bin. As shown in Figs. 5A-5C, the enclosure 502 may have an at least substantially cubic footprint. For instance, the enclosure 502 may have an at least substantially cuboidal shape.

As shown in Figs. 5A-5C, the enclosure 502 may include a plurality of surfaces. The surfaces may include: at least one sidewall 504 (e.g. one sidewall, two sidewalls, three sidewalls, or four sidewalls) and/or a base 506. As further shown in Fig. 5C, the surfaces may include a lid 508, which may be detachable from the fire suppressing bin 500. The enclosure 502 may be partially open. That is, the enclosure 502 may not fully encase the contents of the fire suppressing bins. For instance, if the enclosure includes at least two sidewalls 504, the enclosure need not include a base 506, and the contents may be mounted on or otherwise supported by the sidewalls 504. Equally, if the enclosure includes a base 506, the enclosure need not include any number of sidewalls 504 and the contents may be mounted on or otherwise supported by the base 506.

The fire suppressing bin 500 holds a vessel 510a, 510b. The vessel 510a, 510b comprises a fire suppressant reservoir, which is a chamber suitable for holding fire suppressant. The vessel 510a, 510b may hold fire suppressant in the fire suppressant reservoir. In other words, the vessel 510a, 510b may be a receptacle for the fire suppressant. As such, the fire suppressant reservoir can provide a source and store of fire suppressant in the fire suppressing bin 500.

The fire suppressant may be any agent suitable for suppressing, extinguishing or otherwise controlling fire. For instance, the fire suppressant may comprise at least one of: a dry chemical fire suppressant, such as monoammonium phosphate, sodium bicarbonate, potassium bicarbonate, or potassium chloride; a foam fire suppressant, such as aqueous film-forming foam, film-forming fluoroprotein, or compressed air foam; a wet chemical fire suppressant, such as potassium acetate, potassium carbonate, or potassium citrate; a clean fire suppressant (or an inert gas fire suppressant), such as halons, carbon dioxide, or inert gas; a dry powder fire suppressant, such as sodium chloride; a condensed aerosol fire suppressant; water; and/or any other suitable fire suppressant. Dry chemical fire suppressant, foam fire suppressant, and dry powder fire suppressant smother fires by forming a barrier between the fuel of the fire and the source of oxygen in the atmosphere. Wet chemical fire suppressant similarly forms a soapy film over the fuel. Clean, or gaseous, fire suppressant and condensed aerosol fire suppressant displace oxygen in the atmosphere surrounding a fire with carbon dioxide or other inert gasses. Water, when used as a fire suppressant, cools burning material. In preferred examples according to the present disclosure, the fire suppressant is a foam fire suppressant or a clean fire suppressant (such as a gas fire suppressant).

The stackable container may additionally include a fluidic outlet from which the fire suppressant may be released. In particular, the fluidic outlet can allow fire suppressant release from the fire suppressing bin 500. Accordingly, when positioned within the storage system, e.g., within the cell of a grid of the storage system, the fluidic outlet can allow fire suppressant to be released from the fire suppressing bins 500 into the grid. The fluidic outlet may allow fire suppressant to be release from the fire suppressing bins 500 in substantially any direction, including from the top of the bin, from the bottom of the bin, and/or from a side of the bin. Releasing fire suppressant in multiple directions can improve fire suppressant coverage from the fire suppressing bins. Accordingly, the fluidic outlet may comprise substantially any channel from within the enclosure 502 outside the fire suppressing bin 500.

In some examples, the fluidic outlet may include an opening in the fire suppressing bin 500. For instance, if the fire suppressing bin 500 is not covered by a lid 508, the opening may be an upper opening at the top of the fire suppressing bin 500. As another example, if the fire suppressing bin 500 does not include a base 506, the opening may be a lower opening at the bottom of the fire suppressing bin 500. Here, the terms 'top' and 'bottom' refer to upper and lower planes of the bin 500 when the bin 500 is disposed in a storage system, e.g., according to the vertical direction of the storage system.

In some of these or other examples, the fluidic outlet may include at least one aperture 512 in the enclosure of the fire suppressing bin 500. The aperture 512 may be provided in at least one of the surfaces of the enclosure (e.g., in the surface(s) from which the fire suppressing bin 500 is arranged to release fire suppressant). The aperture 512 is disposed to bring an area within the enclosure 502 into fluid communication with an area outside the fire suppressing bin 500. As shown in Figs. 5A-5C, the fluidic outlet may include a plurality of apertures 512, which can increase the fluid communication volume between the area within and outside the enclosure 502, thereby increasing the maximum fire suppressant flow rate from the bin 500. For instance, as also shown in Figs. 5A-5C, at least a portion of at least one surface of the enclosure 502 may be a grill (e.g., a rigid mesh), in which the fluid outlet is provided by the apertures between the bars and/or slats of the grill.

The vessel 510a, 510b is activatable to enable selective fire suppressant release from its fire suppressant reservoir. When activated, the fire suppressant reservoir of the vessel 510a, 510b is brought into communication with the fluidic outlet such that fire suppressant can flow from the fire suppressant reservoir and through the fluidic outlet. Accordingly, bringing the fire suppressant reservoir into communication with the fluidic outlet opens a channel for the fire suppressant between the fire suppressant reservoir and the fluidic outlet. Activating the vessel 510a, 510b may additionally include propelling the fire suppressant from the fire suppressant reservoir.

The vessel may be activatable in response to a condition indicative of fire. The condition indicative of fire may comprise any suitable condition which might indicate fire. In some examples, the condition indicative of fire includes a combustion biproduct. The condition indicative of fire may include the presence of smoke, an elevated ambient temperature in the grid, and/or flame detection. When the condition indicative of fire comprises an elevated ambient temperature in the grid, the condition may be met when the temperature about the fire suppressing bin is raised above the ambient (steady-state) grid temperature, e.g. by at least 10°C.

The fire suppressing bin 500 may be at least partially formed of a heat-conducting material, such as metal. As metal conducts heat, at least partially forming the fire suppressing bin 500 of a heat-conducting material can improve fire suppressing bin 500 activation time, by improving the amount of time an elevated temperature is conveyed to the vessel. As an example, a heat-conducting material may be disposed from the outer surface of the fire suppressing bin 500 to the vessel to provide a thermal pathway therebetween.

The fire suppressant stored in the vessel may include a heat-expanding fire suppressant, such as a heat-expanding foam fire suppressant. Heat-expanding fire suppressant is configured to expand volumetrically when exposed to heat or a change in heat. Accordingly, in response to an elevation in temperature about the fire suppressing bin 500, the heat-expanding fire suppressant expends through, and is therefore delivered from, the fluidic outlet of the fire suppressing bin 500.

Alternatively, the vessel may be breakable. For instance, the vessel may include a bladder containing the fire suppressant. The vessel may be arranged to rupture in response to an elevation in temperature. As an example, fire suppressant stored in the vessel may expand and/or become thermally excited in response to being exposed to an elevation in temperature. The expanded and/or excited fire suppressant may exert a pressure on the vessel casing. Once the exerted pressure exceeds a rupture pressure of the vessel casing, the vessel ruptures, thereby releasing the fire suppressant from the vessel (e.g., into the enclosure 502), which can bring the fire suppressant into communication with the fluidic outlet. The rupture pressure is the pressure under which the fluid tightness of the casing is compromised, causing a failure or fracture in the casing material. On rupture of the vessel, fire suppressant is delivered through the fluidic outlet.

The condition indicative of fire may include a signal from a fire detection system. The fire detection system may be at least partially disposed in the fire suppressing bin 500, and therefore may include a sensor (such as a temperature or smoke sensor) in the fire suppressing bin 500. The sensor in the fire suppressing bin may be arranged to communicate (e.g., via wired or wireless communication) a signal indicating fire to a receiver at the vessel. Alternatively, the fire detection system may be disposed and distributed about the automated storage and retrieval system and/or the warehouse containing the automated storage and retrieval system. The fire detection system may therefore include one or more sensors (such as temperature or smoke sensors) distributed around the automated storage and retrieval system. The fire detection system may be arranged to communicate (e.g., via wireless or networked communication protocols) a signal indicating fire to a receiver at the vessel. Regardless of the specific fire detection system implementation, the vessel may include an actuator configured to react to the signal from a fire detection system by activating the vessel.

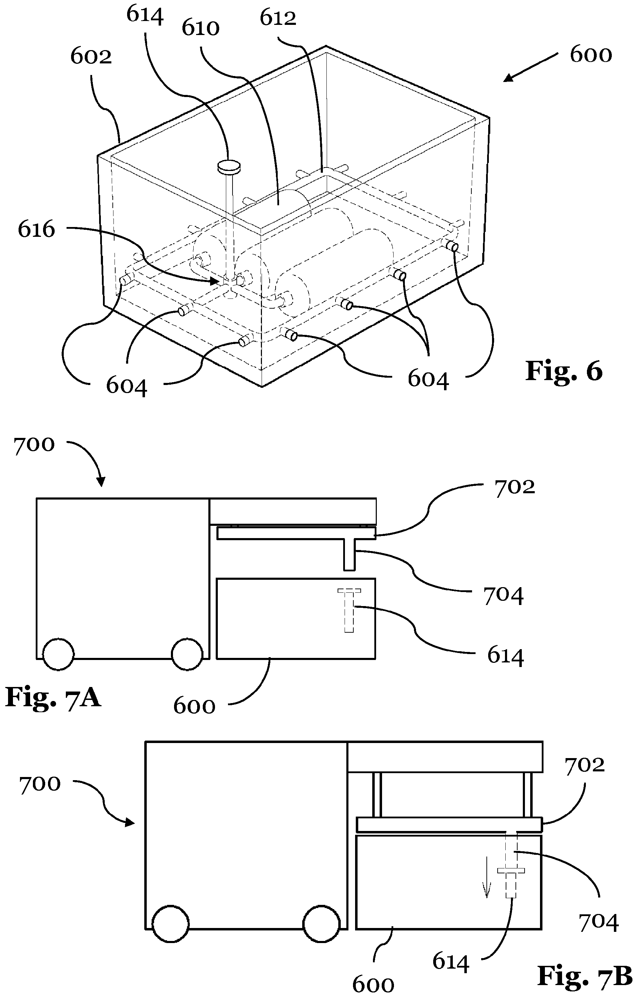

The vessel may also be activatable in response to a mechanical signal (e.g. a physical stimulus). Without limitation, example physical stimuli according to the present disclosure include a perforation of the storage system, or a force exerted onto a trigger (such as the weighted trigger described with respect to Fig. 6). When activated by perforation, the fluid tightness of the vessel casing may be compromised by a perforator of or at the fire suppressing bin 500. The perforator is configured and disposed to perforate or otherwise puncture the vessel casing, which allows fire suppressant to leak out of the vessel casing. The fire suppressant can then be delivered from the fluidic outlet of the fire suppressing bin 500.

As depicted in Fig. 5A, the vessel 510a may comprise at least one cannister (such as the three cannisters shown in Fig. 5A). Some or all of the at least one cannister may be refillable and/or replaceable. Replaceable and/or refillable cannisters may be referred to as cartridges. Replaceable and/or refillable cannisters can allow the fire suppressing bin 500 to be reusable. However, the cannisters need not be replaceable or refillable and may instead be disposed or otherwise recycled after discharge.

In the example of Fig. 5A, the fire suppressant may comprise an expanding foam fire suppressant, such as a heat-expanding foam fire suppressant configured to expand volumetrically when exposed to heat or a change in temperature. Accordingly, on activation of the vessel 510a of Fig. 5A, the fire suppressant in the vessel 510a may expand out of an outlet in the cannister. From the outlet of the cannister, the fire suppressant may pass into and through the fluidic outlet to thereby be delivered from the fire suppressing bin 500.

In some examples (such as the example shown in Fig. 5A), the vessel 510a may include a valve disposed to selectively isolate the fire suppressant reservoir from the fluidic outlet. When open, the valve allows delivery of fire suppressant from the vessel 510a into the fluidic outlet, and out of the fire suppressing bin 500 through the fluidic outlet. The valve is actuatable and activating the vessel 510a may comprise actuating the valve to allow fire suppressant to flow from the fire suppressant reservoir to the fluidic outlet. Accordingly, the vessel 510a and/or fire suppressing bin 500 may additionally include an actuator arranged to activate the valve. Alternatively, the actuator for actuating the valve may be provided by another component of the automated storage and retrieval system, such as by the robotic container-handling vehicles.

An actuatable valve may comprise a passive actuator (e.g., a passive actuation valve) arranged to actuate automatically in response to an actuation condition such as a condition indicative of fire. Alternatively, the actuatable valve may comprise an active actuator (such as a motor-operated valve), arranged to actuate in response to an actuation signal. The actuation signal may be mechanical, electric, or electromagnetic. The signal may originate from a fire detection system. By arranging the actuatable valve to actuate automatically, the fire suppressing bin 500 can deliver fire suppressant into storage spaces in the storage system without manual user involvement. As such, fire suppressing bin 500 can deliver fire suppressant from at user- and robot-inaccessible cells in the storage system. For instance, the fires suppressing bin can be held in any cells of the storage system, not limited to the top cells. Accordingly, the fire suppressing bin 500 of the present disclosure can be particularly suited for supressing fire in containers stored within densely packed automated storage and retrieval systems.

For instance, the valve may include a fusible element. Such valves are particularly useful in passive fire suppression systems since they do not rely on active fire detection signals. Passive fire suppression systems are particularly advantageous in the automated storage and retrieval systems according to the present disclosure because they avoid the need to install active fire detectors throughout the grid, which may be complex and/or expensive. Passive actuators additionally do not require power sources and are therefore particularly useful in passive fire suppressing bins by avoiding the need for installing complex electronics, power supplies (e.g., batteries), and actuators in the storage system. Therefore, passive actuators can therefore also reduce the need for additional wiring or signal generators in the storage system and fire suppressing bin 500 maintenance.

In its unactuated state, the fusible element rests in the channel between the fire suppression reservoir and the fluidic outlet, such that the fusible element isolates the fire suppression reservoir from the fluidic outlet. The fusible element actuates by fusing. For instance, the fusible element may fuse at an actuation temperature. Accordingly, the fusible element in the fire suppressing bin 500 actuates the valve at an actuation temperature and in response to an elevation in temperature about the fire suppressing bin 500. In some examples, the fusible element may comprise an outer casing with a lower melting point than the actuation temperature such that the fusible element fuses by melting. In other examples, the fusible element may comprise a frangible liquid-containing bulb that is configured to break at the actuation temperature. The actuation temperature may depend on the contents and the ambient temperature of the automated storage and retrieval system. For instance, the actuation temperature may be calculated based on the combustion temperature or flash point of the goods stored in storage system. The actuation temperature may be at least 20°C or at least 40°C higher than the actuation temperature of the automated storage and retrieval system. The actuation temperature may be at least 30°C, at least 50°C or at least 70°C.

In some examples, and as further discussed with respect to Fig. 6, the vessel 510a may be a piped vessel comprising a pipe network disposed between the fire suppressant reservoir and the fluidic outlet. By providing a pipe network, fire suppressant can be delivered from the fire suppressant reservoir to the fluidic outlet quicker and with less wastage.

As depicted in Fig. 5B, the vessel 510b may include a bladder arranged to contain fire suppressant. A bladder may be a flexible, expandable container or pouch for storing fluids. The bladder is airtight and watertight and may include the fire suppressant reservoir therein. Without limitation and as an example, the bladder may be elastomeric and may comprise a rubber material, such as a synthetic rubber material. In some implementations, the bladder may be pressurised. The bladder may be breakable. Pressurising the bladder can both improve fire suppressant propulsion on activation and assist in vessel activation, especially in vessel activation by perforation. In the example of Fig. 5B, the fire suppressant may be a gas fire suppressant. Accordingly, on activation of the vessel 510b of Fig. 5B, the fire suppressant in the vessel 510b may expand and diffuse away from the vessel, and out of the fluidic outlet.

The example shown in Fig. 5B may further include a valve disposed to selectively isolate the fire suppressant reservoir from the fluidic outlet, as otherwise described herein. Alternatively, the vessel 510b may be breakable. As such, the vessel 510b may be actuatable by breaking (e.g., on perforation or rupture). The vessel may be activatable by passive or active breaking.

When activatable by passive breaking, the vessel 510b may be arranged to activate automatically in response to an actuation condition such as a condition indicative of fire. For instance, the vessel 510b may be arranged to rupture in response to an elevation in temperature to a temperature at which the pressure exerted by the fire suppressant on the vessel 510b exceeds a rupture pressure of the vessel casing. When the vessel ruptures fire suppressant can be released from the vessel.

When activatable by active breaking, the fire suppressing bin 500 may include an actuator arranged to activate the vessel 510b. The actuator may be arranged to activate the vessel 510b by perforating the vessel. By perforating the vessel 510b, the actuator is arranged to compromise the fluid tightness of the vessel 510b. In these examples, the actuator includes a perforator arranged to and capable of perforating the vessel 510b. The perforator may be a piercer, drill, or borer. Accordingly, to activate the vessel 510b, the actuator may pierce, drill or otherwise bore a hole in the vessel 510b casing. Piercing, drilling or boring into the vessel 510b casing allows fire suppressant to be delivered from the vessel and to the fluidic outlet. The actuator may be arranged to actuate in response to an actuation signal. As otherwise described herein, the actuation signal may be mechanical, electric, or electromagnetic and may originate from a fire detection system.

In any of the examples according to the present disclosure, including the examples depicted in Figs. 5A and 5B, the fire suppression reservoir of the vessel 510a, 510b may be pressurised. The vessel 510a, 510b may be pressurised at a high pressure (e.g., a pressure higher than atmospheric pressure in the fire suppressing bin 500 or the storage system). Pressurising the vessel 510a, 510b can facilitate fire suppressant propulsion on actuation. The vessel 510a, 510b may be pressurised with any suitable propellant, such as nitrogen or carbon dioxide.

In some examples of the present disclosure, the condition indicative of fire may include an actuation signal from a fire detection system, as otherwise described herein. As such, the fire suppressing bin 500 may include a sensor. In these examples, an actuator of the fire suppressing bin 500 may further include a receiver arranged to receive the actuation signal from a fire detection system of the automated storage and retrieval system. The fire detection system may be distributed throughout the frame of the storage system. Therefore, the actuation signal may be transmitted to the receiver in the fire suppressing bin 500 over wireless and/or networked communication.

Fig. 6 shows another example fire suppressing bin 600 according to the present disclosure. The fire suppressing bin 600 of Fig. 6 is shown in phantom view, where components which would otherwise be obscured by the enclosure 602 are depicted by dashed lines.

Unless otherwise stated the fire suppressing bin 600 of Fig. 6 may be as described with respect to the fire suppressing bins 500 of Figs. 5A-5C. For instance, the fire suppressing bin 600 of Fig. 6 is stackable, includes an enclosure 602 with a plurality of surfaces, holds a vessel 610 containing a fire suppressant reservoir, and includes a fluidic outlet. The vessel 610 include three cannisters. The fluidic outlet includes a plurality of apertures 604 in the sidewalls of the enclosure 602. As shown, the vessel 610 is also a piped vessel which includes a pipe network 612 disposed to communicate fire suppressant from the fire suppressant reservoir of the vessel 610 with the apertures 604 of the fluidic outlet. An inlet of the pipe network is at the fire suppressant reservoir and an outlet of the pipe network is at the fluidic outlet.

The fire suppressing bin 600 of Fig. 6 is arranged to activate in response to a mechanical signal (e.g. a physical stimulus). The fire suppressing bin 600 may therefore include an actuator arranged to activate the vessel in response to the mechanical stimulus. As shown in Fig. 6, the actuator may be a weighted trigger 614. The weighted trigger 614 is arranged to activate the vessel upon bearing a triggering force.

For instance, the fire suppressing bin 600 of Fig. 6 may include a valve 616 in the pipe network. The valve 616 may be disposed to selectively isolate the fire suppressant reservoir of the vessel 610 from the fluidic outlet. The valve 616 may be coupled to the weighted trigger 614 such that, upon bearing a triggering force, the weighted trigger 614 opens the valve. When opened, the valve 616 allows fire suppressant to pass from the fire suppressant reservoir to the fluidic outlet.

A triggering force may be a force greater than a threshold which triggers activation of the vessel 610. As an example, the triggering force may be a force greater than a stackable container weight, such as the weight of the fire suppressing bin 600 or otherwise of a storage bin. Accordingly, the weighted trigger is arranged to activate the vessel in response to stacking the fire suppressing bin 600 with (e.g., on top of or below) another stackable container.

In the example shown in Fig. 6, the weighted trigger 614 may extend out of the upper opening at the top of the fire suppressing bin 600. Accordingly, the weighted trigger 614 may be activated by bearing a weight from above the fire suppressing bin 600. For instance, the weighted trigger may be activated by bearing a weight of a higher storage container in a stack of storage containers which includes the fire suppressing bin 600. As such, the weighted trigger 614 may be activated in response to at least one stackable container being stacked upon the fire suppressing bin 600.

In other examples, the weighted trigger may be disposed below the fire suppressing bin 600. For instance, the weighted trigger may extend from below the base of the fire suppressing bin 600. Accordingly, the weighted trigger may be activated by bearing the weight of the fire suppressing bin 600, e.g. when the fire suppressing bin 600 is stacked on top of another storage container. In some of these examples, the weighted trigger may be disposed on the lower side of the lower edges or corners of the enclosure 602 such that the weighted trigger is activated upon engagement with upper sides or corners of lower bins (e.g. fire suppressing bins or storage bins) in the stack.

In other examples, the weighted trigger 614 may be activated by any other suitable mechanical stimulus. Accordingly, the weighted trigger 614 need not extend below or out of the upper opening of the fire suppressing bin 600. The mechanical stimulus may be provided by a robotic container-handling vehicle of the storage system. By providing the mechanical stimulus, the robotic container-handling vehicle can ensure remote fire suppressant release.

Figs. 7A and 7B show example operations for triggering the weighted trigger 614 by a robotic container-handling vehicle 700. The robotic container-handling vehicle includes a vessel activating part 702 (also referred to as an activator 702). The vessel activating part 702 may be a removable module of the robotic container-handling vehicle. For instance, the vessel activating part 702 may have a surface for a gripping device of a robotic vehicle (such as any of the robotic vehicles described with respect to Figs. 3A-3C), such that the vessel activating part 702 can be retrofit onto (e.g. by being carried by) the gripping device of the robotic container-handling vehicle. The vessel activating part 702 may be structured according to the add-on gripping part described in EP24210411.5, the contents of which is hereby incorporated in this application in its entirety.

The vessel activating part 702 includes a protrusion 704. The protrusion is engageable with the weighted trigger 614 of the fire suppressing bin 600. As shown in Fig. 7A, the robot 700 may be aligned with the fire suppressing bin. When aligned with the fire suppressing bin, the protrusion 704 is located above the weighted trigger 614. Then, the vessel activating part 702 may be lowered by the robot 700. The vessel activating part 702 is lowered by the robot 700 (e.g., by lowering the grippers of the robot 700) to engage the protrusion 704 with the weighted trigger 614. Upon engagement with the protrusion 704, the vessel activating part 702 (e.g., via the protrusion 704) applies a triggering force onto the weighted trigger 614, which depresses the weighted trigger, thereby activating the vessel in the fire suppressing bin 600. In these embodiments the triggering force may therefore be a force greater than the weight of the vessel activating part 702, or may be a force imparted by the robot 700 onto the vessel activating part 702.

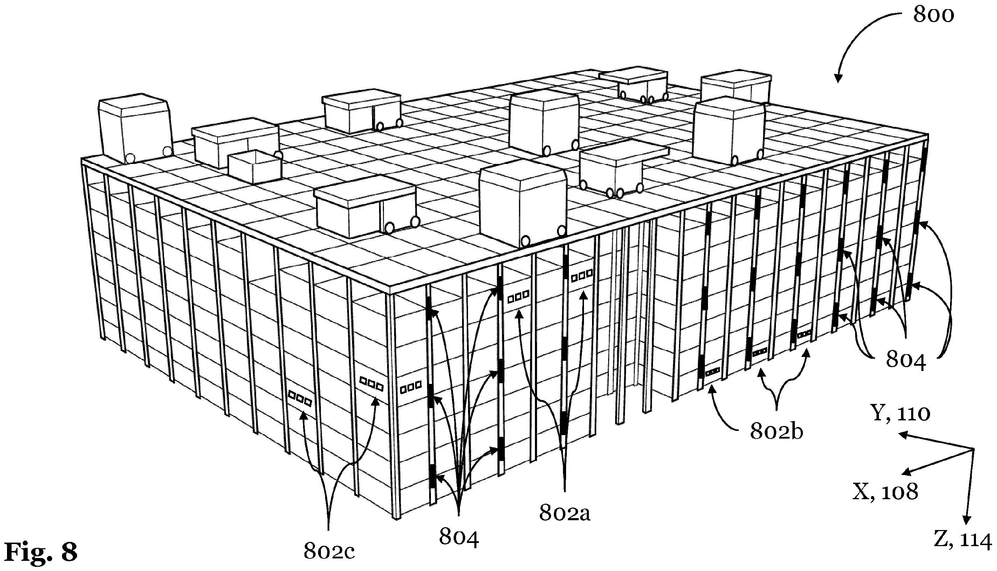

Fig. 8 shows an automated storage and retrieval system 800. Unless otherwise stated, the storage system 800 is as described with respect to the storage system of Fig. 1, and contains stacks of storage containers which include fire suppressing bins 802a, 802b, 802c. The fire suppressing bins 802a, 802b, 802c are as described with respect to any of Figs. 5A-7B. The storage system 800 may include at least one robotic container handling vehicle with a vessel activating part 702 according to Figs. 7A and 7B.

As shown, the fire suppressing bins 802a may be disposed at an upper position in the stack of storage containers stored in a storage column. For instance, the fire suppressing bins 802a may be disposed at the stop of a stack of storage containers in a storage column. When disposed at the stop of a stack of storage containers in a storage column, the fire suppressant in the fire suppressing bins 802a may be a heavier-than-air gas (such as argon or carbon dioxide). Accordingly, when release from the fire suppressing bins 802a, the heavier-than-air gas may be released from the fluidic outlet in the fire suppressing bins 802a and may smother the storage containers located proximal to (e.g. in the same column as, in neighbouring columns of, or otherwise within a zone containing) and below the stack of storage containers comprising the fire supressing bins. Releasing fire suppressant from fire suppressing bins 802a disposed at an upper position in the stack of storage containers can provide a quick, localised, and targeted fire suppression system because fire suppressing bins 802a can readily be brought to the top of a stack of storage containers (e.g., with minimal digging required).

The fire suppressing bins 802b may be disposed at a lower position in - such as the bottom of - a stack of storage containers. Here, the fire suppressant may be lighter-than-air gas (such as nitrogen). Accordingly, when release from the fire suppressing bins 802a, the lighter-than-air gas may be released from the fluidic outlet in the fire suppressing bins 802b and may smother the storage containers located proximal to and above the stack of storage containers comprising the fire supressing bins. Releasing fire suppressant from fire suppressing bins 802a disposed at a lower position in the stack of storage containers can allow fire suppressing bins to be stored in the storage system, without interfering with normal use of the storage system. In other words, fire suppressing bins 802a disposed at a lower position in the stack of storage containers reduces the need to dig fire suppressing bins out of the storage system 800 when picking lower storage bins.

The fire suppressing bins 802c may be disposed at a middle position in a stack of storage containers. The middle position may be any position which is not at the top or the bottom. By disposing the fire suppressing bins 802c at a middle position, the fire suppressing bins may release fire suppressant into storage containers located proximal to (e.g. in the same column as, in neighbouring columns of, or otherwise within a zone containing) the fire suppressing bin 802c. In particular, fire suppressant may be released in any direction from fire suppressing bin 802c. Here, the fire suppressant is preferably a foam fire suppressant. Since the fire suppressing bins can be disposed in any middle position in a stack of storage containers, the fire suppressing bins can be disposed for targeted fire suppression. For instance, the fire suppressing bins can be disposed in zones containing, or otherwise proximal to, storage bins containing flammable goods. Goods may be considered flammable if they have a flash point less than 50°C above the ambient temperature in the automated storage and retrieval system, or if their flash point is at or below 60°C, at or below 50°C, at or below 40°C, or at or below 30°C.

As further shown in Fig. 8, the storage system may include a fire detection system distributed about the frame of the grid. The fire detection system may include any suitable fire detection system for detecting and localising fire within the grid. For instance, the fire detection system may include a plurality of sensors 804 arranged to detect a condition indicative of fire. The sensors 804 may be affixed to, or embedded in, the frame members of the grid.

The sensors 804 may be, for instance, heat sensors arranged to detect an elevation in temperature above the ambient temperature of the storage system. The sensors may be smoke detectors - i.e., detectors suitable for detecting and configured to detect the presence of smoke.

The sensors 804 may be used to localise potential sources of fire and identify zones of the storage system to which to transport fire suppressing bins. Upon detecting a condition indicative of fire in a zone of the storage system 800, the sensors may transmit a signal to the controller of the storage system (such as the controller described herein with respect to Fig. 4). Based on this signal, the controller may instruct the robots to transport a fire suppressing bin to the zone. The controller may further send a signal to trigger fire suppressant release from the fire suppressing bins. For instance, the signal may instruct a robotic container handling vehicle to activate a vessel in the fire suppressing bins via a vessel activating part 702.

### An improved method of supressing fire in an automated storage and retrieval systems

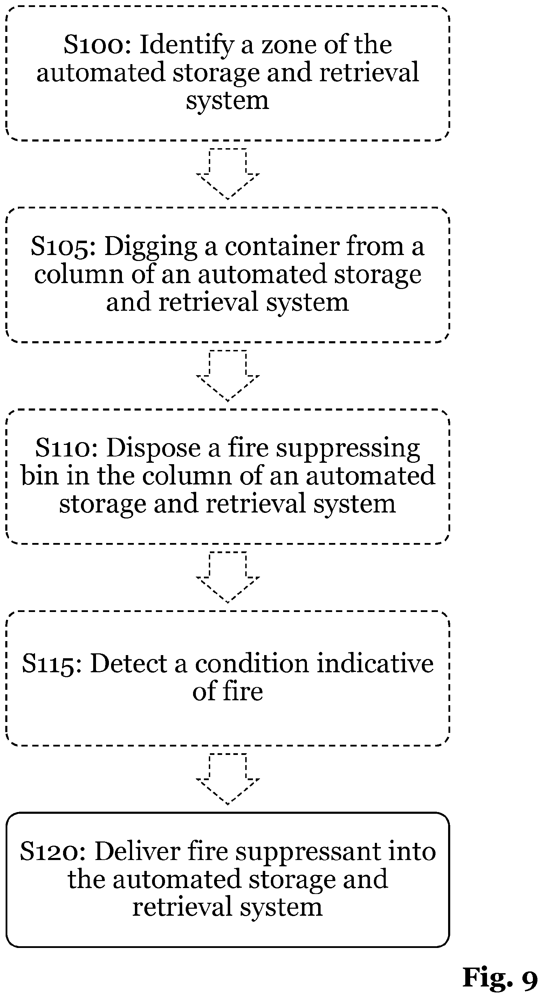

Fig. 9 depicts a flowchart of an example method of suppressing fire in an automated storage and retrieval system. The method of Fig. 9 may involve suppressing fire using a stackable container, such as any of the fire suppressing containers otherwise described herein. The method may be carried out as part of a fire suppression procedure at a storage system. Accordingly, some or all operations of the method may be implemented via instructions from a computing device, such as the computing device described with respect to Fig. 4. The method may therefore be carried out at a computing device.

In some implementations, the method optionally begins at S100 at which a zone of the automated storage and retrieval system is identified. A zone of the automated storage and retrieval system may comprise a subset of the grid (e.g., a subset of cells or columns of the grid). The subset of the grid may be virtually demarked, e.g. at an index stored at the computing system. Alternatively, the zone may be physically demarked. For instance, the zone may be bounded by barriers arranged to retain fluid with the zone. The zone may be arranged to accumulate fire suppressant output. In some implementations, the zone may comprise the storage columns within which flammable goods are stored. Goods may be considered flammable if they have a flash point less than 50°C above the ambient temperature in the automated storage and retrieval system, or if their flash point is at or below 60°C, at or below 50°C, at or below 40°C, or at or below 30°C.

The identified zone may be identified as a zone comprising a condition indicative of fire such as a combustion biproduct, the presence of smoke, an elevation in or elevated temperature, and/or detection of a flame. Accordingly, identifying a zone of the automated storage and retrieval system at S100 may involve detecting a condition indicative of fire within the zone of the automated storage and retrieval system. For instance, identifying the zone may comprise: detecting, by a fire detection system of the storage system (e.g. by a sensor of the fire detection system), a condition indicative of fire in the zone; and/or receiving a signal at a computing device from the fire detection system which indicates that a condition indicative of fire was detected in the zone by the fire detection system. The zone of the storage system may therefore include the column or columns in which a condition indicative or fire is detected as well as the neighbouring columns thereto and/or all columns within a set radius therefrom.

The method may optionally continue to, or start at, S105 which includes digging at least one container from a column of the storage system in which the container is previously stored. The column of the storage system may be a selected column, selected as a column into which to dispose a fire suppressing bin. As such, if the method involves identifying a zone of the automated storage and retrieval system at S100, the column from which the container(s) are dug at S105 comprises a column in the zone of the storage system. The at least one container is dug from the storage system according to a digging operation by one or multiple robots in which the container(s) are sequentially lifted and repositioned, temporarily or permanently, in order to expose a target bin in the column. S105 may therefore involve instructing, by the computing system, the one or multiple robots to perform the digging operation.

The method may optionally continue to, or start at, S110 in which a fire suppressing bin is disposed into a selected column of the storage system. In some implementations, the fire suppressing bin may be disposed into the selected column by a robot of the storage system. Alternatively, the fire suppressing bin may be disposed into the selected column by a user, for instance as part of a fire response operation. S110 may involve instructing, by the computing system, a robot to retrieve a fire suppressing bin and dispose the fire supressing bin in the selected column.

With the fire suppressing bin in a selected column, the method may optionally continue to, or start at, S115 at which a condition indicative of fire is detected. The condition indicative of fire may be detected at S115 by any of the methods otherwise described herein. In some implementations, the condition indicative of fire may be detected at S115 in parallel with or prior to identifying the zone at S100. For instance, the zone may be identified according to S100 as a zone in which the condition indicative of fire is detected according to S115.

Detecting the condition indicative of fire at S115 may comprises actively or passively detecting the condition indicative of fire. As an example, actively detecting the condition indicative of fire may include actively detecting the condition indicative of fire by a sensor of a fire detection system. As an example, passively detecting the condition indicative of fire may include relaying an elevation in temperature to a vessel in the fire suppressing bin, e.g. through a conductive thermal pathway of the fire suppressing bin. As yet another example, passively detecting the condition indicative of fire may include activating a fusible element of a passive fire suppression system.

The method may continue, or alternatively starts at S120 in which fire suppressant is delivered from the fire suppressing bin into the automated storage and retrieval system. In particular, as otherwise described herein, the fire suppressant is delivered from a fluidic outlet of the stackable container. The fire suppressant is delivered from the fluidic outlet into storage containers and/or storage columns proximal to (e.g. in the same column as, in neighbouring columns of, or otherwise within a zone containing) the fire suppressing bin and below the stack of storage containers comprising the fire supressing bins. The storage column into which the fire suppressant is delivered can be selected according to the orientation of the fire suppressing bin in the column. Delivering fire suppressant into the automated storage and retrieval system at S120 may involve instructing, by the computing system, the fire suppressing bin to deliver the fire suppressant. As such, S120 can allow a quick, localised, and targeted fire suppression system.

In some implementations, delivering fire suppressant into the automated storage and retrieval system at S120 may comprise delivering fire suppressant from the fluidic outlet while a robotic container-handling vehicle engages the stackable container. For instance, the robot can trigger delivery of the fire suppressant by engaging a weighted trigger in the fire suppressing bin as otherwise described with respect to Figs. 6-7B. Similarly, delivering fire suppressant from the fluidic outlet while a robotic container-handling vehicle engages the stackable container allows fire suppressant delivery to a larger area by allowing fire suppressant delivery as the fire suppressing bin is transported by the robot.

Delivering fire suppressant into the automated storage and retrieval system at S120 may include activating a vessel in the fire suppressing bin. The vessel may be activated in any manner otherwise described herein. For instance, activating the vessel may include: opening a valve of the vessel; perforating the vessel; triggering fire suppressant expansion; activating the vessel by a robotic container-handling vehicle (e.g. via engagement of a weighted trigger in the fire suppressing bin); and/or stacking the stackable container with another stackable container (e.g. via engagement of a weighted trigger in the fire suppressing bin).

When S120 follows S115, the detection of the condition indicative of fire at S115 may trigger fire suppressant delivery at S120. The fire suppressant may therefore be delivered at S120 in response to a condition indicative of fire being detected at S115. For instance, in response to detecting the condition indicative of fire, the computing system may instruct the vessel to be activated (e.g. by actuating a valve of the vessel).

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

Further, the present disclosure comprises the following clauses:
Clause 1. A stackable container for use in an automated storage and retrieval system, the stackable container comprising:
   an enclosure;
   a vessel comprising a fire suppressant reservoir, the vessel being held in the stackable container by the enclosure; and
   a fluidic outlet for releasing fire suppressant from the stackable container,
   wherein the vessel is activatable to bring the fire suppressant reservoir into communication with the fluidic outlet.
Clause 2. The stackable container of clause 1, wherein the vessel is internally pressurised.
Clause 3. The stackable container of clause 1 or clause 2, wherein the vessel is activatable by perforation.
Clause 4. The stackable container of any preceding clause, wherein the vessel comprises a fire suppressant cannister.
Clause 5. The stackable container of any preceding clause, wherein the fire suppressant comprises an expanding foam fire suppressant.
Clause 6. The stackable container of any preceding clause, wherein the vessel is activatable in response to a condition indicative of fire.
Clause 7. The stackable container of clause 6, wherein the condition indicative of fire comprises: an elevation in temperature; and/or a signal from a fire detection system.
Clause 8. The stackable container of clause 6, wherein the vessel is arranged to rupture in response to the condition indicative of fire.
Clause 9. The stackable container of any preceding clause, wherein the vessel comprises a valve disposed to selectively isolate the fire suppressant reservoir from the fluidic outlet.
Clause 10. The stackable container of clause 9, wherein the valve comprises a fusible element configured to actuate the valve at an actuation temperature.
Clause 11. The stackable container of any preceding clause, wherein the stackable container further comprises an actuator arranged to activate the vessel.
Clause 12. The stackable container of clause 11, wherein the actuator is arranged to activate the vessel in response to an actuation signal.
Clause 13. The stackable container of clause 12, further comprising a sensor arranged to detect a condition indicative of fire and, in response to detecting the condition indicative of fire, transmitting the actuation signal to the actuator.
Clause 14. The stackable container of clause 12 or 13, wherein the actuator comprises a receiver arranged to receive the actuation signal from a fire detection system of the automated storage and retrieval system.
Clause 14a. The stackable container of any of clauses 11-14, wherein the actuator comprises a weighted trigger arranged to activate the vessel in response to or upon bearing a triggering force.
Clause 14b. The stackable container of clause 14a, wherein the triggering force comprises a stackable container weight.
Clause 14c. The stackable container of clause 14a or 14b, wherein the weighted trigger is arranged to activate the vessel in response to stacking the stackable container with another stackable container.
Clause 15. The stackable container of any of clauses 11-14c, wherein the actuator is arranged to activate the vessel by opening a valve of the vessel.
Clause 16. The stackable container of any of clauses 11-15, wherein the actuator is arranged to activate the vessel by perforating the vessel.
Clause 17. The stackable container of any preceding clause, wherein the fluidic outlet comprises an aperture in the enclosure.
Clause 17a. The stackable container of any preceding clause, wherein the vessel is a piped vessel comprising a pipe network, the pipe network disposed between the fire suppressant reservoir and the fluidic outlet.
Clause 18. The stackable container of any preceding clause, wherein the stackable container is formed of metal.
Clause 19. An automated storage and retrieval system comprising:
   a frame defining a plurality of storage columns for receiving stacks of storage containers; and
   a stack of storage containers received within a storage column, wherein the stack of storage containers comprises a stackable container according to any of clauses 1-18.
Clause 20. The automated storage and retrieval system of clause 19, further comprising a fire detection system distributed about the frame.
Clause 20a. The automated storage and retrieval system of clause 20, wherein the fire detection system comprises a plurality of heat sensors.
Clause 21. The automated storage and retrieval system of clause 19 or 20, further comprising a robotic container-handling vehicle comprising an activator arranged to activate the vessel of the stackable container.
Clause 22. A method of suppressing fire in an automated storage and retrieval system using a stackable container, the method comprising:
   delivering fire suppressant from a fluidic outlet of the stackable container into the automated storage and retrieval system.
Clause 23. The method of clause 22, further comprising, prior to delivering the fire suppressant, disposing the stackable container in a selected column of the automated storage and retrieval system.
Clause 24. The method of clause 23, wherein the stackable container is disposed by a robotic container-handling vehicle of the automated storage and retrieval system.
Clause 25. The method of clause 23 or 24, wherein the selected column is in a zone of the automated storage and retrieval system, the zone comprising a condition indicative of fire.
Clause 25a. The method of clause 25, the method further comprising identifying the zone of the automated storage and retrieval system by detecting the condition indicative of fire in the zone.
Clause 26. The method of clause 25, wherein the condition indicative of fire comprises an elevation in temperature.
Clause 27. The method of any of clauses 23-26, further comprising digging at least one additional container from the selected column before disposing the stackable container in the selected column.
Clause 28. The method of any of clauses 22-27, wherein delivering fire suppressant into the automated storage and retrieval system comprises delivering fire suppressant from a fluidic outlet of the stackable container while a robotic container-handling vehicle engages the stackable container.
Clause 29. The method of any of clauses 22-28, wherein delivering fire suppressant into the automated storage and retrieval system comprises activating a vessel comprising a fire suppressant reservoir in the stackable container.
Clause 30. The method of clause 29, wherein activating the vessel comprises at least one of: opening a valve of the vessel; perforating the vessel; and/or triggering fire suppressant expansion.
Clause 30a. The method of clause 29 or 30, wherein activating the vessel comprises: activating the vessel by a robotic container-handling vehicle; and/or stacking the stackable container with another stackable container.
Clause 31. The method of any of clauses 22-30, further comprising detecting a condition indicative of fire, and delivering the fire suppressant in response to detecting the condition indicative of fire.

## Claims

1. A stackable container for use in an automated storage and retrieval system, the stackable container comprising:
an enclosure;
a vessel comprising a fire suppressant reservoir, the vessel being held in the stackable container by the enclosure; and
a fluidic outlet for releasing fire suppressant from the stackable container,
wherein the vessel is activatable to bring the fire suppressant reservoir into communication with the fluidic outlet.

2. The stackable container of claim 1, wherein the vessel is arranged to activate in response to a condition indicative of fire, and wherein the condition indicative of fire comprises: an elevation in temperature; and/or a signal from a fire detection system.

3. The stackable container of claim 1 or claim 2, wherein the stackable container further comprises an actuator arranged to activate the vessel.

4. The stackable container of claim 3, wherein the actuator is arranged to activate the vessel in response to an actuation signal, and wherein either:
the stackable container further comprises a sensor arranged to detect a condition indicative of fire and, in response to detecting the condition indicative of fire, transmitting the actuation signal to the actuator; and/or
the actuator comprises a receiver arranged to receive the actuation signal from a fire detection system of the automated storage and retrieval system.

5. The stackable container of claim 3 or 4, wherein the actuator comprises a weighted trigger arranged to activate the vessel in response to bearing a triggering force.

6. The stackable container of claim 5, wherein the weighted trigger is arranged to activate the vessel in response to stacking the stackable container with another stackable container.

7. The stackable container of any of claims 3-6, wherein the actuator is arranged to activate the vessel by: opening a valve of the vessel; and/or perforating the vessel.

8. The stackable container of any preceding claim, wherein the vessel is a piped vessel comprising a pipe network, the pipe network disposed between the fire suppressant reservoir and the fluidic outlet.

9. The stackable container of any preceding claim, wherein the stackable container is formed of metal.

10. An automated storage and retrieval system comprising:
a frame defining a plurality of storage columns for receiving stacks of storage containers; and
a stack of storage containers received within a storage column, wherein the stack of storage containers comprises a stackable container according to any of claims 1-9.

11. A method of suppressing fire in an automated storage and retrieval system using a stackable container, the method comprising:
delivering fire suppressant from a fluidic outlet of the stackable container into the automated storage and retrieval system.

12. The method of claim 11, further comprising, prior to delivering the fire suppressant, disposing the stackable container in a selected column of the automated storage and retrieval system.

13. The method of claim 12, wherein the selected column is in a zone of the automated storage and retrieval system, the zone comprising a condition indicative of fire, and wherein the method further comprises identifying the zone of the automated storage and retrieval system by detecting the condition indicative of fire in the zone.

14. The method of claims 12 or 13, further comprising digging at least one additional container from the selected column before disposing the stackable container in the selected column.

15. The method of any of claims 11-14, wherein delivering fire suppressant into the automated storage and retrieval system comprises activating a vessel comprising a fire suppressant reservoir in the stackable container, and wherein activating the vessel comprises:
at least one of opening a valve of the vessel, perforating the vessel, and/or triggering fire suppressant expansion; and/or
activating the vessel by a robotic container-handling vehicle; and/or
stacking the stackable container with another stackable container.
